# EUROPÄISCHE PATENTSCHRIFT

(11) **EP 0 978 380 B1**
(45) Veröffentlichungstag und Bekanntmachung des Hinweises auf die Patenterteilung: **05.06.2002**
(21) Anmeldenummer: 99113124.4
(22) Anmeldetag: 07.07.1999
(51) Int. Cl.: B41F 33/00, G05B 23/02

(54) **Steuerrechner für eine Druckmaschine**
Control unit for a printing machine
Organe de calcul pour une machine à imprimer

(30) Priorität: 05.08.1998 DE 29813975 U
(43) Veröffentlichungstag der Anmeldung: 09.02.2000
(73) Patentinhaber: MAN Roland Druckmaschinen AG, 63075 Offenbach (DE)
(72) Erfinder: Tenfelde, Johannes, 63538 Grosskrotzenburg (DE); Dotzert, Michael, 61381 Friedrichsdorf (DE); Hess, Michael, 55252 Mainz-Kastel (DE)

(56) Entgegenhaltungen:
- EP-A- 0 081 739
- EP-A- 0 223 100
- EP-A- 0 243 728
- EP-A- 0 610 711
- DE-A- 2 841 220
- DE-A- 3 522 392
- DE-A- 4 327 848

## Beschreibung

Die Erfindung betrifft einen Steuerrechner für eine Druckmaschine gemäß dem Oberbegriff von Anspruch 1.

### [Stand der Technik]

In Druckmaschinen und insbesondere Bogenoffset-Druckmaschinen sind eine Vielzahl von fernverstellbaren Stellgliedern und sonstigen Einrichtungen angeordnet, wie z.B. Sensoren, Aktuatoren, Anzeige- und Eingabevorrichtungen, welche zu deren Betrieb mit Strömen bestimmter Stärke versorgt werden müssen. Dazu weisen die diesen Komponenten zugeordneten Steuerungen Ausgangskarten mit Endstufen/Ausgangstreibern auf, welche die nötigen Ströme zur Verfügung stellen und die Steuerungslogik (Rechner) von der Leistungselektronik entkoppeln. Die Ausgangsdaten sind mit den entsprechenden Komponenten über steckbare Leitungen verbunden. Die Leitungen sowie die entsprechenden Steckverbinder stellen aber eine Fehlerursache dar, da die Kabel durchtrennt bzw. die Steckverbinder vom entsprechenden Gegenteil abrutschen bzw. bei einem notwendigen manuellen Eingriff nicht wieder richtig aufgesteckt sein können. Die derartig mit den Ausgangskarten verbundenen Komponenten können dann nicht ordnungsgemäß angesteuert werden.

Aus der EP-A-0 223 100 ist eine Steuereinrichtung für einen Druckmaschinenantriebsmotor bekannt, bei der eine Datentransportvorrichtung vorgesehen ist, die Daten, welche in einem Speicher enthalten sind oder die ermittelt werden, in der Steuervorrichtung wirksam werden lässt. Dadurch kann der jeweils angeschlossene Motor in der vorgesehenen Weise bestromt werden.

Aus der EP-A-0 610 711 ist eine Steuervorrichtung für einen elektromotorischen Antrieb und insbesondere einen Garagentorantrieb bekannt. Diese elektronische Steuervorrichtung weist eine Selbsttesteinrichtung nebst Abschalt- und/oder Steuersignale simulierenden Signalerzeugerstufe, eine die diesen Abschalt- und/oder Steuersignalen zugeordnete Reaktion in der zentralen Steuereinheit überprüfende Prüfeinrichtung sowie eine bei Auftreten wenigstens einer Fehlreaktion des Motors blockierende Abschaltvorrichtung auf. Die vorgesehenen Prüfmuster werden insbesondere in drei Phasen erzeugt, nämlich in einer ersten Prüfphase zur Überprüfung der Ruhezustandssignale vor Erzeugung der simulierenden Signale, in einer zweiten Prüfphase zur Überprüfung der Reaktion auf die simulierenden Signale und in einer dritten Prüfphase zur Überprüfung der Ruhezustandssignale nach Wiederabschalten der simulierten Signale.

Aus der DE-A-43 27 848 ist eine Steuereinrichtung für eine Druckmaschine bekannt, bei welcher eine zusätzliche Überwachungseinrichtung vorgesehen ist, die mit dem Tachogenerator der Steuereinrichtung in Signalverbindung steht. Durch die Überwachungseinrichtung werden die Signale von Signalgebern erfasst und aus den Signalzuständen höchstmögliche Drehzahlen ermittelt. Die Signale des Tachosignals werden mit den höchstmöglichen Drehzahlen verglichen. Bei Überschreitung erfolgt Stillsetzen des Antriebes.

### [Aufgabe der Erfindung]

Aufgabe der vorliegenden Erfindung ist es daher, eine Einrichtung gemäß den Oberbegriff von Anspruch 1 derartig zu erweitern, so daß eine ordnungsgemäße elektrische Verbindung zwischen einer Ausgangskarte und der daran angeschlossenen Komponente in einfacher Weise feststellbar ist.

Gelöst wird diese Aufgabe durch die kennzeichnenden Merkmale von Anspruch 1. Weiterbildungen der Erfindung ergeben sich aus den Unteransprüchen.

Gemäß der Erfindung ist vorgesehen, daß die Endstufen/Treiber der Ausgangskarten mit einer Einrichtung zur Überwachung des Ausgangsstromes versehen sind, durch die beim Einschalten eines Ausgangs der der entsprechenden Komponente zugeführte Strom überwachbar ist. Überschreitet der Strom eine durch die Belastbarkeit der angesteuerten Komponente bestimmte Schwelle, wird dies als ein Indiz für einen Kurzschluß gewertet und der Stromfluß abgeschaltet. Die erfindungsgemäße Überwachungseinrichtung ist dazu mit der der Ausgangskarte vorgeordneten Steuerungslogik (Rechner) und/oder direkt mit der Endstufen/dem Ausgangstreiber der Karte verbunden.

Ein derartig erkannter Kurzschluß kann zum einen durch entsprechende Anzeigemittel direkt an der Ausgangskarte angezeigt werden, so daß nach Öffnen des Schaltschrankes der fehlerhafte Zustand nebst dem Fehlerort erkennbar ist. Gemäß einer Weiterbildung der Erfindung ist vorgesehen, daß ein derartig erkannter Kurzschluß an eine übergeordnete Steuerung und von dort an den Leitstand der Druckmaschine weitergeleitet wird, über den dann die Darstellung einer entsprechenden Fehlermeldung erfolgt.

Gemäß einer Weiterbildung der Erfindung ist vorgesehen, daß die erfindungsgemäße Stromüberwachung auch bei einem Nichtschalten eines Ausganges verwertbar ist. Durch den entsprechenden Ausgangstreiber wird ein Prüfstrom eingeprägt, der derartig gering bemessen ist, daß er nicht zum Ansprechen der jeweiligen Komponente/ des Stellgliedes führt. Durch die erfindungsgemäße Überwachungsvorrichtung wird dieser Prüfstrom überwacht, wobei ein Nichtfließen als ein Indiz für eine Leitungsunterbrechung (Kabelbruch, abgefallener Steckverbinder usw.) gewertet wird. Somit ist die erfindungsgemäße Stromüberwachung sowohl beim Schalten als auch beim Nichtschalten der Ausgänge (High-Level/Low-Level) aktivierbar.

Gemäß einer bevorzugten Weiterbildung der Erfindung ist vorgesehen, daß die Überwachung des geschalteten/nicht geschalteten Ausgangs konfigurierbar ist, d.h. die Überwachung ist zu- bzw. abschaltbar. Dies ist insbesondere bei Ausgängen nötig, welche mit entsprechenden Relais direkt verbunden sind, da sonst das durch das Relais bedingte Öffnen des Steuerstromkreises als Leitungsunterbrechung interpretiert würde.

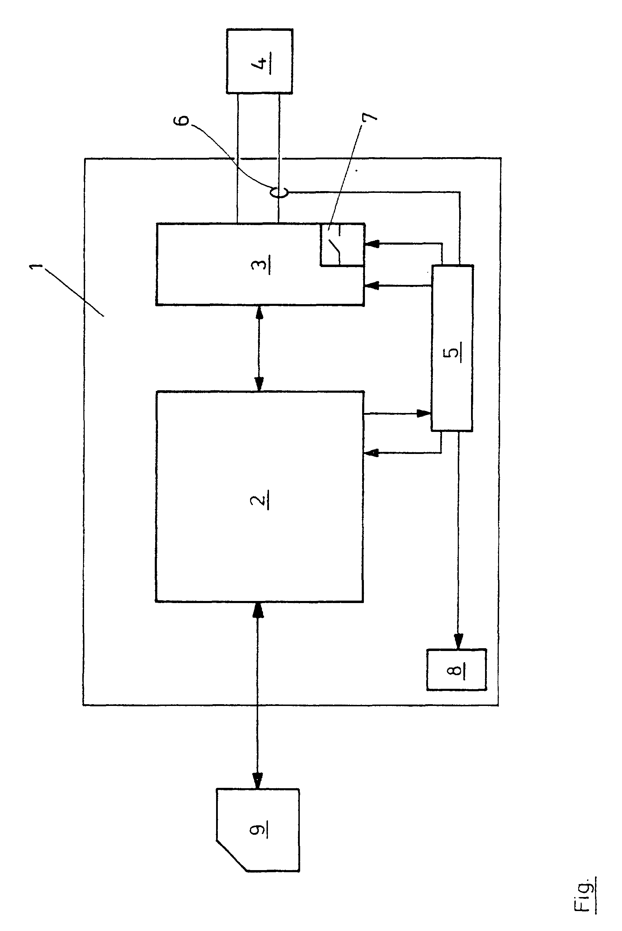

Des weiteren erfolgt die Erläuterung eines Ausführungsbeispiels der Erfindung anhand der Zeichnung. Diese zeigt prinzipiell einen erfindungsgemäß ausgebildeten Steuerrechner mit Überwachungseinrichtung.

### [Beispiele]

Ein Steuerrechner 1 weist eine Steuerlogik 2 in Form eines programmierbaren Rechners oder einer in Hardware-Komponenten realisierten Logik auf. Der Steuerrechner 1 ist mit mehreren Verbrauchern 4 verbunden, wobei in der Figur nur ein Verbraucher 4 dargestellt ist.

Der Verbraucher 4 ist über Leitungen mit einer Treiber/Endstufen aufweisenden Ausgangskarte 3 verbunden, die in Signalverbindungen mit der Steuerlogik 2 des Steuerrechners 1 steht. Durch die Ausgangskarte 3 erfolgt ein den in der Steuerlogik 2 des Steuerrechners 1 erzeugten Signalen entsprechendes Bestromen des Verbrauchers 4.

Der Steuerrechner 1 weist eine Überwachungseinrichtung 5 auf, die mit einer Stromwerterfassung 6 zwischen der Ausgangskarte 3 und dem Verbraucher 4 in Signalverbindung steht. Die Stromerfassung 6 kann hierbei als Strommesseinrichtung in der Zuleitung zum Verbraucher 4 ausgebildet sein oder als Einrichtung realisiert sein, welche den Ausgangsstrom indirekt über die Spannung eines Ausgangstreibers (Transistor) erfaßt. Weiterhin steht die Überwachungsschaltung 5 mit der Steuerlogik 2 des Steuerrechners 1 in Signalverbindung, um bei Erfassen eines zu hohen Stromes durch die Stromerfassung 6 über die Steuerlogik 2 den entsprechenden Ausgang der Ausgangskarte 3 und somit den entsprechenden Treiber / die Endstufe abzuschalten. Weiterbildend ist vorgesehen, daß die Überwachungsschaltung 5 direkt mit einem Stromschalter 7 des entsprechenden Ausganges der Ausgangskarte 3 in Signalverbindung steht.

Weiterhin steht die Überwachungsschaltung 5 mit der Steuerlogik 2 derartig in Signalverbindung, so daß bei Schalten des entsprechenden Ausgangs der Ausgangskarte 3 auf "Low" ein Prüfstrom unterhalb der Schaltschwelle des Verbrauchers 4 generierbar ist. Der entsprechende Ausgang der Ausgangskarte 3 ist zur Abgabe eines derartigen Prüfstromes ausgebildet.

Wird durch die Überwachungsschaltung 5 im angeschalteten Zustands des Ausganges (High) bzw. im abgeschalteten Zustands des Ausganges (Low) ein zu hoher bzw. ein zu geringer bzw. nicht vorhandener Strom erfaßt (Stromerfassung 6), so erfolgt durch entsprechende Signalgenerierung das Ansteuern eines Anzeigemittels 8 direkt auf der Platine des Steuerrechners 1. Die Anzeige 8 ist direkt mit der Überwachungsschaltung 5 verbunden und dergestalt ausgebildet, daß der defekte Ausgang der Ausgangskarte 3 ermittelbar ist. Gemäß einer Weiterbildung der Erfindung ist vorgesehen, daß ein Defekt der Ausgangskarte 3 bzw. der zwischen Ausgangskarte 3 und Verbraucher 4 befindlichen Leitung über die Steuerlogik 2 direkt als Fehlersignal an den Leitstand 9 der nicht dargestellten Druckmaschine gesendet wird. Am Leitstand 9 ist dabei die Art und der Fehlerort, gegebenenfalls mit Anweisungen zur Behebung der Störung anzeigbar.

### [Bezugszeichenliste]

- 1: Steuerrechner
- 2: Steuerlogik
- 3: Ausgangskarte (Endstufe/Treiber)
- 4: Verbraucher (Stellglied/Stromverbraucher)
- 5: Überwachungsschaltung
- 6: Stromerfassung
- 7: Stromschalter
- 8: Anzeige (Steuerrechner 1)
- 9: Leitstand (Druckmaschine)

## Patentansprüche

1. Steuerrechner für eine Druckmaschine, insbesondere Bogenoffsetdruckmaschine, wobei der Steuerrechner (1) über einen Ausgangstreiber (3) mit ein oder mehreren Stromverbrauchern (4) verbunden ist und durch den Ausgangstreiber (3) Ströme mit vorgegebenen Werten bereitstellbar sind,
**dadurch gekennzeichnet,**
**dass** der Steuerrechner (1) eine Überwachungsschaltung (5) aufweist, welche mit einer dem Ausgang des Ausgangstreibers (3) zugeordneten Stromerfassung (6) in Signalverbindung steht, wobei durch die Überwachungsschaltung (5) die Stromwerte des Ausgangstreibers (3) mit vorgegebenen Werten vergleichbar und bei Abweichungen Fehlersignale erzeugbar sind,
und **dass** durch die Überwachungsschaltung (5) im geschalteten Zustand des Ausgangstreibers (3) der Strom mit einem vorgegebenen Höchstwert vergleichbar ist.

2. Steuerrechner nach Anspruch 1,
**dadurch gekennzeichnet,**
**dass** durch den Ausgangstreiber (3) bei ausgeschaltetem Ausgang ein unterhalb der Ansprechschwelle des Verbrauchers (4) liegender Prüfstrom generierbar und dieser durch die Überwachungsschaltung (5) feststellbar ist.

3. Steuerrechner nach einem der vorhergehenden Ansprüche,
**dadurch gekennzeichnet,**
**dass** die Überwachungsschaltung (5) mit einem dem Ausgangstreiber (3) zugeordneten Stromschalter (7) in Signalverbindung steht.

4. Steuerrechner nach einem der vorhergehenden Ansprüche,
**dadurch gekennzeichnet,**
**dass** die Überwachungsschaltung (5) mit einer dem Steuerrechner (1) zugeordneten Anzeige (8) in Signalverbindung steht.

5. Steuerrechner nach einem der vorhergehenden Ansprüche,
**dadurch gekennzeichnet,**
**dass** die Fehlersignale der Überwachungsschaltung (5) an einem mit dem Steuerrechner (1) in Signalverbindung stehenden Leitstand (9) der Druckmaschine darstellbar sind.

## Claims

1. Control computer for a printing press, particularly an offset sheet printing press, wherein the control computer (1) is connected via an output driver (3) with one or more current users (4) and wherein, by the output driver (3), currents with preset values can be made available, **characterised in that** the control computer (1) has a monitoring circuit (5) which is in signal connection with a current generator (6) fitted to the output of the output driver (3), wherein via the monitoring circuit (5), the current values of the output driver (3) can be compared with preset values and, on deviations, error signals can be generated, and that, by means of the monitoring circuit (5) in the switched-on condition of the output driver (3), the current is comparable with a preset highest value.

2. Control computer according to Claim 1, **characterised in that** by the output driver (3) with switched off output, a test current lying below the requirement level of the user (4) can be generated and this is detectable via the monitoring circuit (5).

3. Control computer according to one of the preceding Claims, **characterised in that** the monitoring circuit (5) is in signal connection with a current switch (7) fitted to the output driver (3).

4. Control computer according to one of the preceding Claims, **characterised in that** the monitoring circuit (5) is in signal connection with an indicator (8) fitted to the control computer (1).

5. Control computer according to one of the preceding Claims, **characterised in that** the error signals of the monitoring circuit (5) can be displayed at a control desk (9) of the press which is in signal connection with the control computer (1).

## Revendications

1. Calculateur de commande pour une machine d'impression, en particulier une machine d'impression offset à feuilles, le calculateur de commande (1) étant relié, par l'intermédiaire d'un circuit de sortie (3), à un ou plusieurs consommateurs de courant (4) et des courants de valeurs prédéfinies pouvant être mis à disposition par le circuit de sortie (3),
**caractérisé en ce que** le calculateur de commande (1) présente un circuit de surveillance (5) qui est en liaison de signalisation avec un dispositif de détection de courant (6) associé à la sortie du circuit de sortie (3), les valeurs de courant du circuit de sortie (3) pouvant être comparées à des valeurs prédéfinies par le circuit de surveillance (5) et, lors d'écarts, des signaux d'erreur pouvant être engendrés, et **en ce que**, par le circuit de surveillance (5), dans l'état commuté du circuit de sortie (3), le courant peut être comparé à une valeur maximale prédéfinie.

2. Calculateur de commande selon la revendication 1,
**caractérisé en ce que**, par le circuit de sortie (3), pour la sortie mise hors circuit, un courant de test se trouvant au-dessous du seuil de réponse du consommateur (4) peut être engendré et celui-ci peut être déterminé par le circuit de surveillance (5).

3. Calculateur de commande selon une des revendications précédentes,
**caractérisé en ce que** le circuit de surveillance (5) est en liaison de signalisation avec un commutateur de courant (7) associé au circuit de sortie (3).

4. Calculateur de commande selon une des revendications précédentes,
**caractérisé en ce que** le circuit de surveillance (5) est en liaison de signalisation avec un affichage (8) associé au calculateur de commande (1).

5. Calculateur de commande selon une des revendications précédentes,
**caractérisé en ce que** les signaux d'erreur du circuit de surveillance (5) peuvent être représentés au niveau d'un poste de commande (9) de la machine d'impression se trouvant en liaison de signalisation avec le calculateur de commande (1).
